# EUROPEAN PATENT APPLICATION

(11) **EP 3 391 983 A1**
(43) Date of publication of application: **24.10.2018**
(21) Application number: 17796105.9
(22) Date of filing: 08.05.2017
(51) Int. Cl.: B22F 3/16, B22F 3/105, B22F 3/115, B22F 3/24, B33Y 10/00, C22F 1/10, C22C 19/05, C22F 1/00

(54) **METHOD FOR PRODUCING METAL MEMBER**

(30) Priority: 12.05.2016 JP 2016096238
(71) Applicant: Mitsubishi Heavy Industries, Ltd., Tokyo 108-8215 (JP)
(72) Inventor: TAMURA Tomoko, Tokyo 108-8215 (JP); HIRAMATSU Noriyuki, Tokyo 108-8215 (JP); SAKAKIBARA Kiyokatsu, Tokyo 108-8215 (JP)
(74) Representative: Henkel, Breuer & Partner
(86) International application number: PCT/JP2017/017423
(87) International publication number: WO 2017/195744

(57) **Abstract**

This method for producing a metal member comprises: a step for shaping a metal member that is configured from an Ni-based alloy by additive manufacturing; and a step for subjecting the metal member to a solution heat treatment. With respect to the solution heat treatment, a heat treatment is carried out at a temperature within the temperature range of from (TC - 100)°C to (TC - 50)°C (inclusive) (wherein TC is the solvus temperature of the Ni-based alloy). Consequently, a metal member shaped by additive manufacturing is able to ensure sufficient creep characteristics and low cycle fatigue characteristics.

## Description

### Technical Field

The present invention relates to a method of manufacturing a metal member, especially to a method of manufacturing a metal member by using additive manufacturing.

### Background Art

The additive manufacturing is a technique to mold or shape a structure by laminating a material layer sequentially based on three-dimensional (3D) model data. For example, 3D printer is the most typical apparatus that shapes the structure by the additive manufacturing. Attention has been paid to the additive manufacturing as the technique that can quickly and cheaply shape the structure having a complicated 3D shape. The additive manufacturing is applied to the manufacturing of a metal member, too. As the additive manufacturing that can be applied to the manufacturing of the metal member, a powder sintering laminate molding method and a hot melt lamination method are known.

The metal member made by the additive manufacturing has material characteristics different from those of the metal member manufactured by forging and casting. First, the metal member manufactured by the additive manufacturing has the organization of fine crystal. Second, since undergoing the process of melting and solidification, the metal member has considerable residual stress. For this reason, the metal member manufactured by the additive manufacturing shows the properties different from those of the metal member manufactured by forging and casting.

In the metal member, the securing of durability often becomes important. This is applied to the metal member manufactured by the additive manufacturing. The inventors focused attention especially on a creep characteristic and a low cycle fatigue characteristic. For example, these characteristics are very important in the metal member used in the aerospace field.

As one technique to realize the good creep characteristic and the good low cycle fatigue characteristic, a heat treatment is thought of. In the metal member shaped by forging and casting, in order to secure the good creep characteristics and the low cycle fatigue characteristics, various types of heat treatment are considered. However, the metal member shaped by the additive manufacturing shows the properties different from those of the metal member manufactured by forging and casting. Therefore, the same heat treatment as in the metal member shaped by forging and casting is not always optimal.

Therefore, technical needs exist in case of provision of the technique to secure a good creep characteristic and a good low cycle fatigue characteristic, for the metal member manufactured by the additive manufacturing.

JP 2013-96013A discloses a heat treatment of a metal member shaped by the additive manufacturing. This Patent Literature 1 describes the heat treatment of a structure shaped from inconel 738LC (IN738LC) ("Inconel" is a registered trademark), and discloses that the coarsening of crystal grains has considerably occurred by (1) the heat treatment of 3 hours at 1250°C and (2) the heat treatment of 3 hours at 1260°C, 4 hours at 1180°C, 2.5 hours at 1120°C, and 24 hours at 850°C. The inconel 738LC is the material that has a melting point range of 1230°C to 1315°C, i.e. the solid solution temperature of 1230°C, and the liquidus temperature of 1315°C.

### Citation List

[Patent literature 1] JP 2013-96013A

### Summary of the Invention

Therefore, one object of the present invention is to provide the technique to secure the creep characteristic and the low cycle fatigue characteristic which are sufficient in practical use, for a metal member manufactured by the additive manufacturing. The other objects of the present invention would be understood by the skilled person from the following disclosure.

In one aspect of the present invention, a method of manufacturing a metal member includes shaping the metal member configured of Ni-based alloy by an additive manufacturing, and carrying out a solution treatment to the metal member. In the solution treatment, a heat treatment is carried out at a temperature in a temperature range of (TC-100)°C to (TC-50)°C (TC is a solid solution temperature of Ni-based alloy).

In one embodiment, the metal member is configured of a precipitation hardening type Ni-Cr system Ni-based alloy. In this case, the method further includes: carrying out a precipitation hardening treatment to the metal member to which the solution treatment has been carried out.

According to the present invention, the sufficient creep characteristic and low cycle fatigue characteristic can be secured for the metal member shaped by the additive manufacturing.

### [Brief Description of the Drawings]

[FIG. 1]

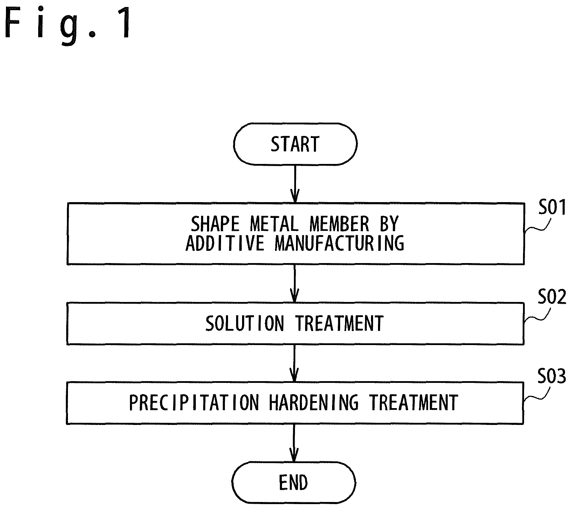

   FIG. 1 is a flow chart showing a method of manufacturing a metal member according to an embodiment.
[FIG. 2]

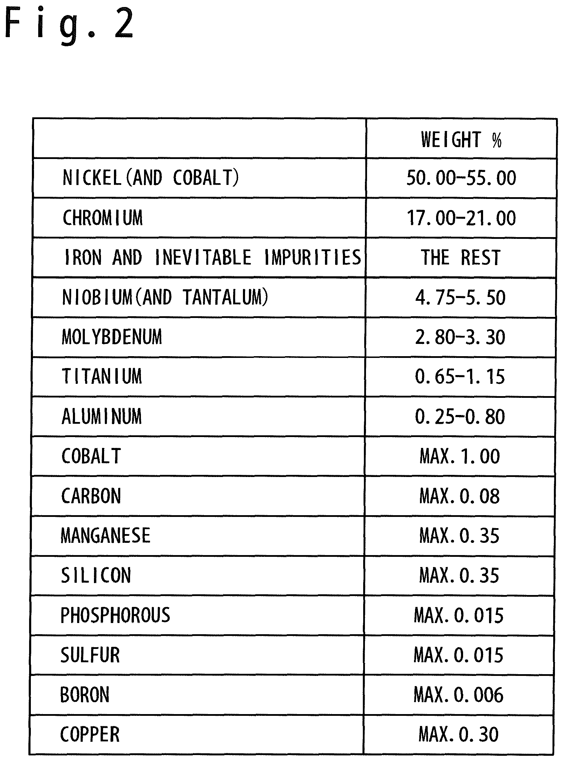

   FIG. 2 is a table showing the chemical composition of inconel 718 determined in the standard.
[FIG. 3]

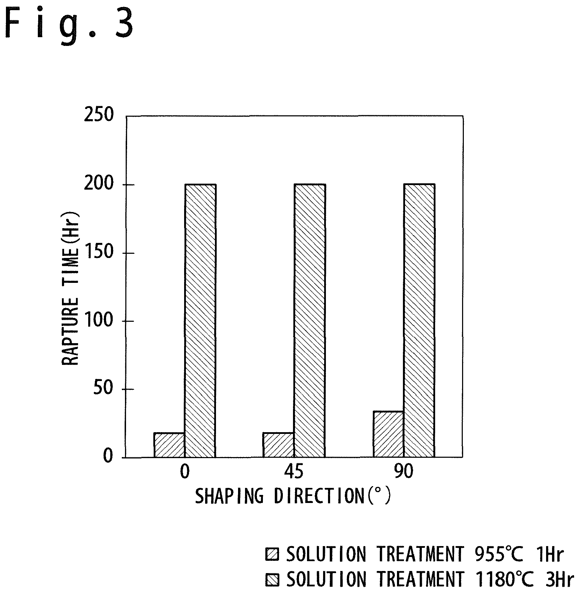

   FIG. 3 is a graph showing creep characteristic of a test piece of the embodiment and that of a comparison example.
[FIG. 4A]

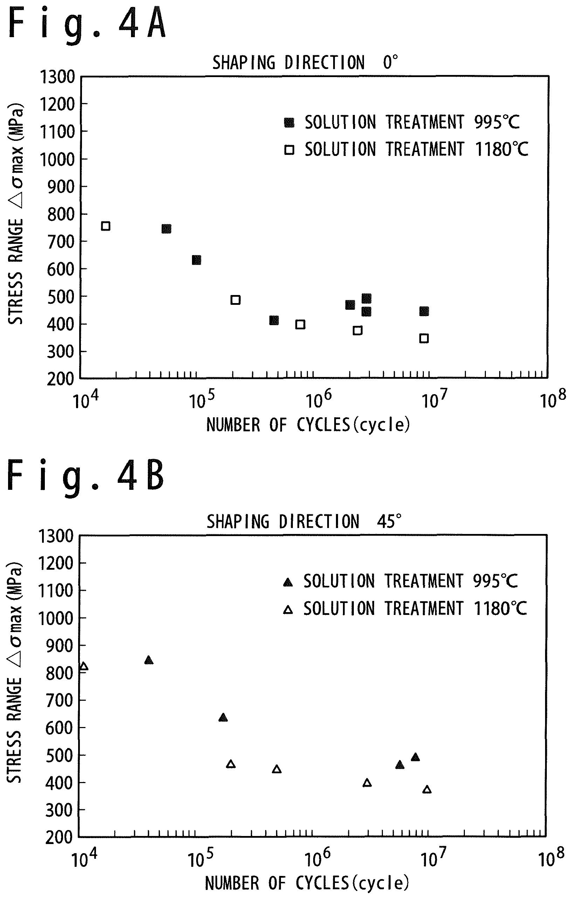

   FIG. 4A is a diagram showing graphs of the low cycle fatigue characteristic of a test piece of the embodiment and a test piece of a comparison example which are produced so that a length direction is identical to a shaping direction.
[FIG. 4B]
   FIG. 4B is a diagram showing graphs of the low cycle fatigue characteristic of a test piece of the embodiment and a test piece of the comparison example which are produced so that an angle between the length direction and the shaping direction is 45°.
[FIG. 4C]

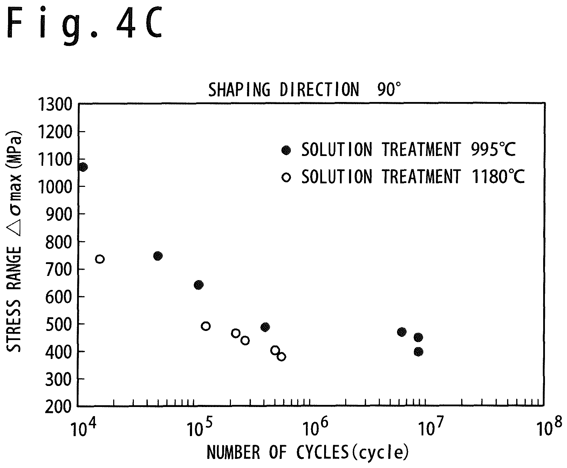

   FIG. 4C is a diagram showing graphs of the low cycle fatigue characteristic of a test piece of the embodiment and a test piece of the comparison example which are produced so that an angle between the length direction and the shaping direction is 90°.
[FIG. 5]

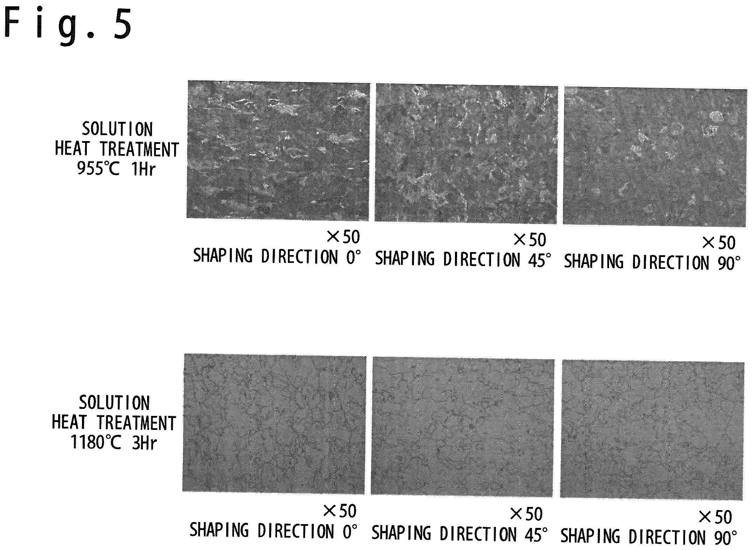

   FIG. 5 is an organization photograph of a test piece of the embodiment and a test piece of the comparative example.

### [Description of the Embodiments]

Hereinafter, embodiments of the present invention will be described with reference to the attached drawings.

In the present embodiment, a metal member formed of Ni-based alloy, more specifically, the metal member formed of precipitation hardening-type Ni-Cr system alloy is manufactured by using an additive manufacturing. For example, as the precipitation hardening-type Ni-Cr system alloy, inconel 718, inconel 735, inconel 738LC, inconel X-750 and so on are raised.

FIG. 1 is a flow chart showing a method of manufacturing a metal member according to the embodiment.

First, the shaping of the metal member is carried out by the additive manufacturing (Step S01). Most typically, the metal member having a desired three-dimensional shape is formed by a hot melt lamination method.

Next, a solution treatment is carried out (Step S02). As well-known to a skilled person, in the solution treatment, the metal member is heated to a temperature or above at which an alloy component is dissolved to solid solution, is maintained to the heated temperature for a sufficient time, and is quenched.

In the present embodiment, a heat treatment in the solution treatment at the step S02 is carried out in a temperature range of (TC-100)°C to (TC-50)°C. Here, TC is a solid solution temperature of the material (i.e. Ni-based alloy) of the metal member. For example, regarding inconel 718, the melting point range is from 1260°C to 1335°C, and the solid solution temperature is 1260°C. Therefore, the heat treatment in the solution treatment is carried out in the temperature range of 1160°C to 1210°C. Note that this temperature range is considerably higher than a temperature range used typically in the solution treatment of the metal member of Ni-based alloy shaped by forging or casting. Preferably, the heat treatment time in the solution treatment is from 1 hour to 12 hours, and more preferably, the heat treatment time is from 2 hours to 4 hours. The solution treatment is carried out in an inert gas atmosphere of normal pressure or a vacuum atmosphere.

Next, the precipitation hardening treatment is carried out (Step S03). The precipitation hardening treatment is a heat treatment in which the precipitation hardening (age hardening) is artificially carried out, and a material is hardened by precipitating a difference aspect of intermetallic compound and so on from the supersaturated solid solution. The precipitation hardening treatment is carried out as a heat treatment in a temperature range of 600°C to 800°C for a comparatively long time (e.g. from 12 hours to 24 hours).

Note that in the method of manufacturing the metal member in the present embodiment, the solution treatment is carried out in a comparatively high temperature range of (TC-100)°C to (TC-50)°C (TC is the solid solution temperature) but in the temperature range slightly different from the solid solution temperature. By carrying out the solution treatment in such a temperature range, the creep characteristic and the low cycle fatigue characteristic which are sufficient for a practical use can be secured to the metal member shaped by the additive manufacturing. The specific embodiments of the present invention will be described below.

### [Embodiments]

In the present embodiment, the metal member configured of inconel 718 was shaped by the additive manufacturing, more specifically, the hot melt lamination method.

FIG. 2 is a table showing the chemical composition of inconel 718 which is determined in the standard. As understood from FIG. 2, inconel 718 is Ni-Cr-Fe system alloy which contains nickel as a main component (the most component). In inconel 718, the melting point range is from 1260°C to 1335°C and the solid solution temperature is 1260°C.

The solution treatment was carried out to the metal member of inconel 718 shaped by the additive manufacturing. The metal members were prepared in which the heat treatment in the following two conditions was carried out for the solution treatment:
Embodiment: 1180°C, 3 hours
Comparative example: 955°C, 1 hour.
The solution treatment was carried out in the inert gas atmosphere of normal pressure or the vacuum atmosphere.

Note that the temperature of the solution treatment of the metal member in the embodiment is in the temperature range of (TC-100)°C to (TC-50)°C (TC is the solid solution temperature). Also, the temperature of the solution treatment of the metal member in the comparative example is a temperature of the solution treatment carried out generally to the metal member of inconel 718 shaped by forging or casting, and out of the above temperature range.

After the solution treatment, a precipitation hardening treatment was carried out. In the precipitation hardening treatment, a heat treatment at 720°C for 8 hours was carried out, and after that, a heat treatment at 620°C for 10 hours was carried out.

After the precipitation hardening treatment, test pieces were cut down from the metal members in the embodiment and the comparative example. The test pieces were prepared of 3 types, i.e. a first type having a shaping direction in a length direction (a lamination direction in the additive manufacturing), a second type having the angle of 45° between the length direction and the shaping direction, and a third type having the angle of 90° between the length direction and the shaping direction. Note that in FIG. 3 to FIG. 5, an example of "the shaping direction of 0°" means that the length direction and the shaping direction are identical to each other. Similarly, "the shaping direction of 45°" means that the angle between the length direction and the shaping direction is 45°, and "the shaping direction of 90°" means that the angle between the length direction and the shaping direction is 90°.

A creep test, a low cycle fatigue test and the photography of organization photograph were carried out to each of the test pieces (the test pieces in the embodiment and the test pieces of the comparative example) described above.

FIG. 3 is graphs showing the result of the creep test. Note that the creep test was carried out by applying the tensile stress of 450 MPa at the temperature of 705°C. As understood from FIG. 3, in the test piece of the comparative example (the temperature of the solution treatment is 955°C), a rapture time was 30 hours at longest and showed an inferior creep characteristic. On the other hand, the test piece of the embodiment (the temperature of the solution treatment is 1180°C) showed the good creep characteristic, compared with the test piece of the comparative example. In the test piece of the embodiment, the rapture time of about 200 hours was obtained. This rapture time is inferior to the rapture time of the metal member produced by forging but is almost equal to that of the metal member made by casting.

This result shows that the creep characteristic which is sufficient in practical use can be obtained by the method of manufacturing the metal member in this embodiment.

FIG. 4A to FIG. 4C are graphs showing the results of the low cycle fatigue test. In detail, FIG. 4A shows the result of the low cycle fatigue test of the test piece in which the length direction and the shaping direction are identical to each other. FIG. 4B shows the result of the low cycle fatigue test of the test piece in which the angle between the length direction of the shaping direction is 45°. FIG. 4C shows the result of the low cycle fatigue test of the test piece in which the angle between the length direction of the shaping direction is 90°.

The test pieces of the comparative example showed good low cycle fatigue characteristics even in any of the shaping directions. The low cycle fatigue characteristic of the test piece of the comparative example was approximately equal to that of the test piece made by forging.

On the other hand, the low cycle fatigue characteristic of each of the test pieces of the embodiment was inferior, comparing with those of the test pieces of the comparative example. However, the low cycle fatigue characteristic which was sufficient in practical use was shown even in each of the test piece of the embodiment.

The results of the creep test and the low cycle fatigue test are understood from the reason that the coarsening of crystal grains has occurred in the test piece of the embodiment. FIG. 5 shows the organization photographs of the test pieces of the embodiment and the test pieces of the comparative example. As understood from FIG. 5, the organization of the fine crystal has been formed in the test pieces of the comparative example. On the other hand, the coarsening of crystal grains has been seen in the test pieces of the embodiment.

The organization of the fine crystal is basically formed in the metal member made by the additive manufacturing. This draws out the good low cycle fatigue characteristic whereas becomes a factor to make the creep characteristic degrade. However, the creep characteristic and the low cycle fatigue characteristic which were sufficient in practical use were obtained in the test pieces of the embodiment in which the solution treatment was carried out at a temperature considerably higher than the typical temperature for the solution treatment but in a range lower slightly than the solid solution temperature. It is thought that the above fact is because the coarsening of crystal grains has occurred in the solution treatment.

The embodiments of the present invention have been described specifically. The present invention should not be interpreted to be limited to the above-mentioned embodiments. It is obvious to the skilled person that the present invention may be realized with various changes or modifications.

This application is based on Japanese Patent Application No. 2016-096238 filed May 12, 2016 and claims the benefit of the priority of that application. The disclosure thereof is incorporated herein by reference.

## Claims

1. A method of manufacturing a metal member, comprising:
shaping a metal member configured of Ni-based alloy by an additive manufacturing; and
carrying a solution treatment to the metal member,
wherein in the solution treatment, a heat treatment is carried out at a temperature in a temperature range of (TC-100)°C to (TC-50)°C (TC is a solid solution temperature of Ni-based alloy).

2. The method of manufacturing a metal member according to claim 1, wherein Ni-based alloy is a precipitation hardening type Ni-Cr system Ni-based alloy, and
wherein the method further comprises:
carrying out a precipitation hardening treatment to the metal member to which the solution treatment has been carried out.
